# EUROPEAN PATENT SPECIFICATION

(11) **EP 2 714 765 B1**
(45) Date of publication and mention of the grant of the patent: **11.10.2017**
(21) Application number: 12727959.4
(22) Date of filing: 22.05.2012
(51) Int. Cl.: C08G 59/14, C08G 59/30, C08G 59/40, C08G 63/692, C09D 171/00

(54) **COATING COMPOSITIONS FOR CONTAINERS**
BESCHICHTUNGSZUSAMMENSETZUNGEN FÜR BEHÄLTER
COMPOSITIONS DE REVÊTEMENT POUR RÉCIPIENTS

(30) Priority: 23.05.2011 US 201113113127
(43) Date of publication of application: 09.04.2014
(73) Proprietor: PPG Industries Ohio, Inc., Cleveland, OH 44111 (US)
(72) Inventor: LIST, Michael, Milford, Ohio 45150 (US); MOUSSA, Youssef, Loveland, Ohio 45140 (US); KNOTTS, Claudia, Cincinatti, Ohio 45244 (US)
(74) Representative: f & e patent
(86) International application number: PCT/US2012/038961
(87) International publication number: WO 2012/162299

(56) References cited:
- EP-A2- 0 386 814
- WO-A1-2011/009024
- US-A- 4 059 550
- US-A- 4 425 451
- US-A- 4 461 857
- US-A- 4 739 020
- US-A1- 2004 077 801

## Description

### FIELD OF THE INVENTION

The present invention relates to compositions that are useful for coating containers of various sorts, such as food and beverage containers.

### BACKGROUND OF THE INVENTION

A wide variety of coatings have been used to coat the surfaces of food and beverage containers. For example, metal cans are sometimes coated using coil coating or sheet coating operations, that is, a plane or coil or sheet of a suitable substrate, for example, steel or aluminum, is coated with a suitable composition and cured. The coated substrate is then formed into the canned body or canned end. Alternatively, the coating composition may be applied, for example, by spraying and dipping, to the formed can and then cured. Coatings for food and beverage containers should preferably be capable of high speed application to the substrate and provide the necessary properties when cured to perform in a demanding end use. For example, the coating should be safe for food contact and have excellent adhesion to the substrate.

Food or beverage cans comprising a coating composition disposed thereon comprising an emulsion polymerized latex polymer that is substantially free of bound bisphenol A and aromatic glycidyl ether compounds are disclosed in WO2011009024.

Many of the coating compositions for food and beverage containers are based on epoxy resins that are the polyglycidyl ethers of bisphenol A. Bisphenol A in packaging coatings either as bisphenol A itself (BPA); derivatives thereof, such as diglycidyl ethers of bisphenol A (BADGE), epoxy novolak resins and polyols prepared with bisphenol A and bisphenol F are problematic. Although the balance of scientific evidence available to date indicates that small trace amounts of BPA or BADGE that might be released from existing coatings does not pose health risks to humans. These compounds are nevertheless perceived by some as being harmful to human health. Consequently, there is a strong desire to eliminate these compounds from coatings for food and beverage containers. Accordingly, what is desired is a packaging coating composition for food or beverage containers that does not contain extractable quantities of BPA, BADGE or other derivatives of BPA and yet has excellent properties such as excellent adhesion to the substrate.

### SUMMARY OF THE INVENTION

The subject matter of the present invention is defined in claims 1-15 as attached. Embodiments described herein which are not covered by the claims merely serve to illustrate the technical context of the present invention.

The present invention provides a coating composition comprising:
(a) a polyether polyol having a hydroxyl functionality of 3 to 8 comprising a reaction product of a reaction mixture comprising a saccharide and an alkylene oxide, and
(b) a reaction product comprising:
   (i) a phosphorus acid, and
   (ii) an epoxy resin and/or a polyester polyol.

The invention also provides for the resultant coated article comprising:
(a) a substrate, and
(b) a coating deposited thereon from the coating composition mentioned immediately above.

The coating composition is formulated such that it is substantially free of bisphenol A (BPA) and derivatives thereof, such as bisphenol A diglycidyl ether (BADGE).

### DETAILED DESCRIPTION

As used herein, unless otherwise expressly specified, all numbers such as those expressing values, ranges, amounts or percentages may be read as if prefaced by the word "about", even if the term does not expressly appear. Moreover, it should be noted that plural terms and/or phrases encompass their singular equivalents and vice versa. For example, "a" polymer, "a" crosslinker, and any other component refers to one or more of these components.

When referring to any numerical range of values, such ranges are understood to include each and every number and/or fraction between the stated range minimum and maximum.

As employed herein, the term "polyol" or variations thereof refers broadly to a material having an average of two or more hydroxyl groups per molecule. The term "polycarboxylic acid" refers to the acids and functional derivatives thereof, including anhydride derivatives where they exist, and lower alkyl esters having 1-4 carbon atoms.

As used herein, the term "polymer" refers broadly to prepolymers, oligomers and both homopolymers and copolymers. The term "resin" is used interchangeably with "polymer".

The terms "acrylic" and "acrylate" are used interchangeably (unless to do so would alter the intended meaning) and include acrylic acids, anhydrides, and derivatives thereof, such as their C₁-C₅ alkyl esters, lower alkyl-substituted acrylic acids, e.g., C₁-C₂ substituted acrylic acids, such as methacrylic acid, ethacrylic acid, etc., and their C₁-C₅ alkyl esters, unless clearly indicated otherwise. The terms "(meth)acrylic" or "(meth)acrylate" are intended to cover both the acrylic/acrylate and methacrylic/methacrylate forms of the indicated material, e.g., a (meth)acrylate monomer. The term "acrylic polymer" refers to polymers prepared from one or more acrylic monomers.

As used herein, "a" and "the at least one" and "one or more" are used interchangeably. Thus, for example, a coating composition that comprises "a" polymer can be interpreted to mean the coating composition includes "one or more" polymers.

As used herein, the molecular weights are determined by gel permeation chromatography using a polystyrene standard. Unless otherwise indicated, molecular weights are on a number average basis (Mn).

The polyether polyol has from 3 to 8, preferably 6 to 8 carbon atoms. Suitable polyether polyols are reaction products of polyhydroxyl compounds having 3 to 8, and preferably 6 to 8, hydroxyl groups with alkylene oxide. Examples of suitable polyhydroxyl compounds are pentaerythritol, ditrimethylol propane, dipentaerythritol, diglycerol and saccharides such as sucrose, dextrose, lactose and alpha-methyl glucosides, wherein in accordance with the invention saccharides are used as the polyhydroxyl compounds. Examples of alkylene oxide are those containing 2 to 4 carbon atoms such as ethylene oxide, 1,2-propylene oxide, 1,2-butylene oxide and 2,3-butylene oxide and mixtures thereof.

The process for preparing the reaction products is well known in the art. Usually alkylene oxides are mixed with the polyhydroxyl compound and a suitable catalyst such as an amine or alkali metal hydroxide and optionally a non-reactive solvent such as an aromatic solvent, for example, toluene or xylene. The ratio of polyhydroxyl compound to alkylene oxide is adjusted to give a hydroxyl number of from 150 to 600. Such reaction products are commercially available from Dow Chemical Company under the trademark VORONOL and from Bayer Material Science under the trademark MULTRANOL.

Typically the polyether polyol is present in the coating composition in amounts of 2 to 50 percent by weight based on weight of resin solids in the coating composition.

Also present in the coating composition is the reaction product of a phosphorus acid and a polyepoxide and/or a polyester resin.

Suitable polyepoxides contain two or more epoxy or oxirane groups in the molecule, such as polyglycidyl ethers of polyhydric alcohols. Typical polyglycidyl ethers are epoxide-terminated linear epoxy resins having a 1,2-epoxy equivalency not substantially in excess of 2, usually about 1.5 to 2, and is preferably difunctional with regard to epoxy. The polyepoxide typically has a number average molecular weight (Mn) of at least 300, typically 300 to 2400 g/mole.

Examples of suitable polyglycidyl ethers of polyhydric alcohols can be formed by reacting epihalohydrins with polyhydric alcohols, such as dihydric alcohols, in the presence of an alkali condensation and dehydrohalogenation catalyst such as sodium hydroxide or potassium hydroxide. Useful epihalohydrins include epibromohydrin, dichlorohydrin and especially epichlorohydrin.

Suitable polyhydric alcohols can be aromatic, aliphatic or cycloaliphatic and include, but are not limited to, phenols that are at least dihydric phenols, such as dihydroxybenzenes, for example, resorcinol, pyrocatechol and hydroquinone. Aliphatic polyhydric alcohols that can be used include, but are not limited to, glycols such as ethylene glycol, diethylene glycol, triethylene glycol, 1,2-propylene glycol, 1,4-butylene glycol, 2,3-butylene glycol, pentamethylene glycol, polyoxyalkylene glycol; polyols such as sorbitol, glycerol, 1,2,6-hexanetriol, erythritol and trimethylolpropane; and mixtures thereof. An example of a suitable cycloaliphatic alcohol is cyclohexane dimethanol, and the preferred polyepoxide is the polyglycidyl ether of 1,4-cyclohexane dimethanol.

The polyester resin that is reacted with the phosphorus acid contains both hydroxyl functionality and carboxylic acid functionality. The polyester resin typically has a hydroxyl number of 20 to 75 mg KOH per gram of polyester resin and an acid value of 15 to 20 mg KOH per gram of polyester resin; each measured on a non-volatile solids basis.

The polyester resins have number average molecular weights (Mn) of 1000 to 10,000 g/mole.

Suitable polyester resins are typically prepared by condensation (esterification) according to known processes [see, for example, Zeno Wicks, Jr., Frank N. Jones and S. Peter Pappas, Organic Coatings: Science and Technology, Vol. 1, pp. 122-132 (John Wiley & Sons: New York, 1992)]. The polyester resin is usually derived from a mixture of at least one polyfunctional alcohol (polyol), generally a mixture of diols and triols esterified with a polyacid or anhydride. The polyacid component comprises an alpha, beta-ethylenically unsaturated polycarboxylic acid or anhydride.

The polyester resins are typically prepared from a mixture of the alpha, beta-ethylenically unsaturated polycarboxylic acid, usually with an aromatic and/or aliphatic polycarboxylic acid, and a polyol component, typically a mixture of a diol and triol. The polyol and polycarboxylic acid are combined in desired proportions and chemically reacted using standard esterification (condensation) procedures to provide a polyester having both hydroxyl and carboxylic acid groups in the polyester resin.

Examples of suitable polycarboxylic acids or anhydrides include, but are not limited to, maleic anhydride, maleic acid, fumaric acid, itaconic acid, phthalic acid, phthalic anhydride, isophthalic acid, trimellitic anhydride, terephthalic acid, naphthalene dicarboxylic acid, adipic acid, azelaic acid, succinic acid, sebacic acid and various mixtures thereof.

When used, the aromatic polycarboxylic acid is used in amounts of 70 percent by weight, typically 50 to 65 percent by weight based on total weight of the polycarboxylic acid or anhydride.

Examples of suitable diols, triols and polyols include, but are not limited to, ethylene glycol, propylene glycol, 1,3-propanediol, glycerol, diethylene glycol, dipropylene glycol, triethylene glycol, trimethylolpropane, trimethylolethane, tripropylene glycol, neopentyl glycol, pentaerythritol, 1,4-butanediol, trimethylol propane, hexylene glycol, cyclohexane dimethanol, and polyethylene or polypropylene glycol.

As mentioned above, the polyol component is a mixture of a diol and a triol. The weight ratio of diol to triol typically ranges from 0.5 to 10 to 1.

The equivalent ratio of polyol component to polycarboxylic acid is from 0.9 to 1.1 to 1.0.

The phosphorus acid which is reacted with the polyepoxide and/or the polyester resin can be a phosphinic acid, a phosphonic acid or is preferably phosphoric acid. The phosphoric acid can be in the form of an aqueous solution, for example, an 85 percent by weight aqueous solution, or can be 100 percent phosphoric acid or super phosphoric acid. The acid is provided in amounts of about 0.2-0.5 equivalents of phosphoric acid per equivalent of epoxy of the polyepoxide and hydroxyl of the polyester, i.e., 0.2-0.45 P-OH groups per oxirane group or per hydroxyl group of the polyester. The reaction of the phosphorus acid with the polyepoxide and/or the polyester is typically conducted in organic solvent. The organic solvent for reaction with the polyepoxide is preferably a hydroxyl functional compound, typically a monofunctional compound. Among the hydroxyl functional compounds which may be used are aliphatic alcohols, cycloaliphatic alcohols and alkyl ether alcohols. Particularly preferred hydroxyl functional compounds include n-butanol and 2-butoxyethanol. For reaction with the polyester, the organic solvent is typically an aromatic solvent, a ketone or an ester. Examples include methyl ethyl ketone, methyl isobutyl ketone, butyl glycol acetate and methoxypropyl acetate. The organic solvent typically has a boiling point of 65 to 250ºC. The organic solvent for the reaction is typically present in amounts of about 20 to 50 percent by weight based on total weight of phosphorus acid, polyglycidyl ether of cyclohexane dimethanol and organic solvent.

The reactants and the organic solvent are typically mixed at a temperature between 50ºC. to 95ºC. and once the reactants are contacted, the reaction mixture is maintained at a temperature preferably between 90ºC. to 200ºC. The reaction typically is allowed to proceed for a period of about 45 minutes to 6 hours.

The reaction product is typically present in the coating composition in amounts up to 10 percent by weight, preferably 0.1 to 5 percent by weight based on weight of resin solids in the coating composition. Amounts less than 0.1 percent by weight result in inferior adhesion of the coating composition to the substrate where amounts greater than 10 percent by weight provide no additional advantage.

Besides the polyether polyol, the coating composition can optionally contain an adjuvant polymer. Examples of such adjuvant polymers are acrylic polymers and polyester polymers.

The acrylic polymer is preferably a polymer derived from one or more acrylic monomers. Furthermore, blends of acrylic polymers derived from the monomers of acrylic acid can be used. Preferred monomers are acrylic acid, methyl acrylate, ethyl acrylate, propyl acrylate, butyl acrylate, penta acrylate, hexyl acrylate, methacrylic acid, methyl methacrylate, ethyl methacrylate, propyl methacrylate, butyl methacrylate, penta methacrylate and hexyl methacrylate. The acrylic polymer may also contain hydroxyl groups which typically are derived from hydroxy-substituted acrylic or methacrylic acid esters. Examples include hydroxyethyl acrylate and hydroxypropyl methacrylate. The weight average molecular weight of the acrylic polymer component is preferably at least 5,000 g/mole, more preferably from 15,000 to 100,000 g/mole. The acrylic polymer typically has an acid value of 30 to 70, such as 40 to 60 mg KOH/g; a hydroxyl value of 0 to 100, such as 0 to 70 mg of KOH/g and a glass transition temperature (Tg) of -20 to +100ºC., such as +20 to +70ºC.

The polyester polymers are prepared by processes well known in the art comprising the condensation polymerization reaction of one or more polycarboxylic acids with one or more polyols. Examples of suitable polycarboxylic acids are phthalic acid, isophthalic acid, terephthalic acid, 1,4-cyclohexane dicarboxylic acid, succinic acid, sebacic acid, methyltetrahydrophthalic acid, methylhexahydrophthalic acid, tetrahydrophthalic acid, dodecane dioic acid, adipic acid, azelaic acid, naphthylene dicarboxylic acid, pyromellitic acid, dimer fatty acids and/or trimellitic acid.

The polyol component is, for example, selected from diols or triols and preferably from mixtures thereof. Examples of suitable polyols include ethylene glycol, 1,3-propanediol, diethylene glycol, dipropylene glycol, triethylene glycol, 1,4-butanediol, 2-methyl-1,3-propanediol, 1,4-cyclohexane dimethanol, 1,6-hexanediol, neopentyl glycol, trimethylolpropane and glycerol. The polyester preferably has a number average molecular weight between 1000 and 20,000 g/mole.

The polyester polymers typically have an acid value between 0 to 20, such as 0 to 5 mg of KOH/g, a hydroxyl number between 50 to 200, such as 70 to 150 mg of KOH/g, a glass transition temperature (Tg) between -20ºC. and +50ºC., such as -10ºC. and +40ºC.

The adjuvant polyols when present are present in amounts up to 90 percent by weight, usually 10 to 90 percent by weight based on weight of resin solids in the coating composition.

Typically curing agents are present in the composition, which are reactive with the polyether polyol and the adjuvant polyol.

Among the curing agents which may be used are phenolplasts or phenol-formaldehyde resins and aminoplast or triazine-formaldehyde resins. The phenol-formaldehyde resins are preferably of the resol type. Examples of suitable phenols are phenol itself, butyl phenol, xylenol and cresol. Cresol-formaldehyde resins, the types typically etherified with butanol, are often used. For the chemistry in preparation of phenolic resins, reference is made to "The Chemistry and Application of Phenolic Resins or Phenolplasts", Vol. V, Part I, edited by Dr. Oldring; John Wiley & Sons/Cita Technology Limited, London, 1997. Examples of commercially available phenolic resins are PHENODUR^{®} PR285 and BR612 and those resins sold under the trademark BAKELITE^{®}, typically BAKELITE 6581 LB.

Examples of aminoplast resins are those which are formed by reacting a triazine such as melamine or benzoguanamine with formaldehyde. Preferably, these condensates are etherified typically with methanol, ethanol, butanol including mixtures thereof. For the chemistry preparation and use of aminoplast resins, see "The Chemistry and Applications of Amino Crosslinking Agents or Aminoplast", Vol. V, Part II, page 21 ff., edited by Dr. Oldring; John Wiley & Sons/Cita Technology Limited, London, 1998. These resins are commercially available under the trademark MAPRENAL^{®} such as MAPRENAL MF980 and under the trademark CYMEL^{®} such as CYMEL 303 and CYMEL 1128, available from Cytec Industries. Typically, the crosslinking agent is present in amounts of 5 to 50, preferably 20 to 40 percent by weight, the percentages by weight being based on the weight of total resin solids in the coating composition.

Other optional ingredients can be included in the coating composition. Typically, the coating composition will contain a diluent, such as water, or an organic solvent or a mixture of water and organic solvent to dissolve or disperse the resinous binder and the reaction product of a phosphorus acid and the polyepoxide and or polyester polyol. The organic solvent is selected to have sufficient volatility to evaporate essentially entirely from the coating composition during the curing process such as during heating from 175-205ºC. for about 5 to 15 minutes. Examples of suitable organic solvents are aliphatic hydrocarbons such as mineral spirits and high flash point VM&P naphtha; aromatic hydrocarbons such as benzene, toluene, xylene and solvent naphtha 100, 150, 200 and the like; alcohols, for example, ethanol, n-propanol, isopropanol, n-butanol and the like; ketones such as acetone, cyclohexanone, methylisobutyl ketone and the like; esters such as ethyl acetate, butyl acetate, and the like; glycols such as butyl glycol, glycol ethers such as methoxypropanol and ethylene glycol monomethyl ether and ethylene glycol monobutyl ether and the like. Mixtures of various organic solvents can also be used. For aqueous compositions containing acid functional adjuvant polymers such as acid functional acrylic polymers, the acid groups are at least partially neutralized with an amine to assist in the dispersion or dissolution of the adjuvant polymer in the aqueous medium. When present, the diluent is used in the coating compositions in amounts of about 20 to 80, such as 30 to 70 percent by weight based on total weight of the coating composition.

Another optional ingredient that is typically present in the coating composition is a catalyst to increase the rate of cure or crosslinking of the coating compositions. Generally acid catalyst may be used and is typically present in amounts of about 0.05 to 5 percent by weight. Examples of suitable catalyst are dodecyl benzene sulfonic acid, methane sulfonic acid, paratoluene sulfonic acid, dinonyl naphthalene disulfonic acid and phenyl phosphonic acid. It has been found that the amount of acid catalyst in the coating compositions of the invention is not as great as would normally be expected due to the presence of the reaction product of the phosphorus acid with the polyepoxide and/or polyester. These reaction products are acidic and have been found to contribute to the cure of the coating composition.

Another useful optional ingredient is a lubricant, for example, a wax which facilitates manufacture of metal closures by imparting lubricity to the sheets of the coated metal substrate. Preferred lubricants include, for example, carnauba wax and polyethylene-type lubricants. If used, the lubricant is preferably present in the coating compositions of at least 0.1 percent by weight based on weight of resin solids in the coating composition.

Another useful optional ingredient is a pigment such as titanium dioxide. If used, the pigment is present in the coating compositions in amounts no greater than 70 percent by weight, preferably no greater than 40 percent by weight based on total weight of solids in the coating composition.

Surfactants can optionally be added to the coating composition to aid in flow and wetting of the substrate. Examples of suitable surfactants include, but are not limited to, nonyl phenol polyether and salts. If used, the surfactant is present in amounts of at least 0.01 percent and no greater than 10 percent based on weight of resin solids in the coating composition.

The compositions used in the practice of the invention, are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof are not intentionally added but may be present in trace amounts because of unavoidable contamination from the environment. The compositions can also be substantially free and may be essentially free and may be completely free of Bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means less than 20 parts per billion (ppb) of any of the above mentioned compounds derivatives or residues thereof.

The coating compositions of the present invention can be applied to containers of all sorts and are particularly well adapted for use on food and beverage cans (e.g., two-piece cans, three-piece cans, etc.). Besides food and beverage containers, the coating compositions can be applied to containers for aerosol applications such as deodorant and hair spray.

Two-piece cans are manufactured by joining a can body (typically a drawn metal body) with a can end (typically a drawn metal end). The coatings of the present invention are suitable for use in food or beverage contact situations and may be used on the inside or outside of such cans. They are particularly suitable for spray applied, liquid coatings, wash coatings, sheet coatings, over varnish coatings and side seam coatings.

Spray coating includes the introduction of the coating composition into the inside or outside of a preformed packaging container. Typical preformed packaging containers suitable for spray coating include food cans, beer and beverage containers, and the like. The sprayed preformed container is then subjected to heat to remove the residual solvents and harden the coating.

A coil coating is described as the coating, typically by a roll coating application, of a continuous coil composed of a metal (e.g., steel or aluminum). Once coated, the coating coil is subjected to a short thermal, ultraviolet, and/or electromagnetic curing cycle, for hardening (e.g., drying and curing) of the coating. Coil coatings provide coated metal (e.g., steel and/or aluminum) substrates that can be fabricated into formed articles, such as two-piece drawn food cans, three-piece food cans, food can ends, drawn and ironed cans, beverage can ends, and the like.

A wash coating is commercially described as the coating of the exterior of two-piece drawn and ironed ("D&I") cans with a thin layer of protectant coating. The exterior of these D&I cans are "wash-coated" by passing preformed two-piece D&I cans under a curtain of a coating composition. The cans are inverted, that is, the open end of the can is in the "down" position when passing through the curtain. This curtain of coating composition takes on a "waterfall-like" appearance. Once these cans pass under this curtain of coating composition, the liquid coating material effectively coats the exterior of each can. Excess coating is removed through the use of an "air knife". Once the desired amount of coating is applied to the exterior of each can, each can is passed through a thermal, ultraviolet, and/or electromagnetic curing oven to harden (e.g., dry and cure) the coating. The residence time of the coated can within the confines of the curing oven is typically from 1 minute to 5 minutes. The curing temperature within this oven will typically range from 150ºC. to 220ºC.

A sheet coating is described as the coating of separate pieces of a variety of materials (e.g., steel or aluminum) that have been pre-cut into square or rectangular "sheets". Typical dimensions of these sheets are approximately one square meter. Once coated, each sheet is cured. Once hardened (e.g., dried and cured), the sheets of the coated substrate are collected and prepared for subsequent fabrication. Sheet coatings provide coated metal (e.g., steel or aluminum) substrate that can be successfully fabricated into formed articles, such as two-piece drawn food cans, three-piece food cans, food can ends, drawn and ironed cans, beverage can ends, and the like.

A side seam coating is described as the spray application of a liquid coating over the welded area of formed three-piece food cans. When three-piece food cans are being prepared, a rectangular piece of coated substrate is formed into a cylinder. The formation of the cylinder is rendered permanent due to the welding of each side of the rectangle via thermal welding. Once welded, each can typically requires a layer of liquid coating, which protects the exposed "weld" from subsequent corrosion or other effects to the contained foodstuff. The liquid coatings that function in this role are termed "side seam stripes". Typical side seam stripes are spray applied and cured quickly via residual heat from the welding operation in addition to a small thermal, ultraviolet, and/or electromagnetic oven.

### EXAMPLES

The following examples are offered to aid in understanding of the present invention and are not to be construed as limiting the scope thereof. Unless otherwise indicated, all parts and percentages are by weight.

### Example A

### Reaction Product of Phosphoric Acid and Cyclohexane Dimethanol Diglycidyl Ether

110.14 g of 85 percent orthophosphoric acid and 89.30 g of butanol is added to the flask. The mixture is heated to 230ºF. (110ºC.) under nitrogen inert blanket. When the temperature is reached, the nitrogen blanket is turned off and a premix of 463.30 g of 1,4-cyclohexane dimethanol glycidyl ether (0.286 equivalents of phosphoric acid per equivalent of epoxy) and 151.27 g of butanol is fed over a period of 2 hours and 10 minutes. The batch temperature is maintained below 245ºF. (118ºC.) during the addition. After the completion of the 2 hours and 10 minutes feed, 13.7 g of butanol is added to the flask and temperature is reduced to 219ºF. (104ºC.) and held for additional 2 hours. Additional 17.30 g of butanol is added to the flask and the resulting reaction product had a resin solids content of 65.91 percent by weight.

### Example 1

A clear varnish included from the following mixture of ingredients:

| Ingredient | Parts by Weight | Non-Volatile Weight |
|---|---|---|
| Acrylic Resin Component¹ | 524.8 | 158.1 |
| Sucrose Polyol² | 87.413 | 87.413 |
| Cymel 303³ | 107.591 | 107.591 |
| 1,4-Cyclohexane Dimethanol Diglycidyl Ether of Example A | 2.769 | 1.825 |
| Phenyl Acid Phosphate (catalyst) | 1.110 | 0.833 |
| Deionized Water | 134.300 | 0.000 |

| | | |
|---|---|---|
| ¹ Carboxylic acid group containing acrylic resin partially neutralized with amine and dispersed in water. ² VORANOL 360 from Dow Chemical Co. ³ Methylated melamine crosslinker from Cytec Industries. | | |

The ingredients were added to a container in the order indicated with mild agitation to form a clear varnish.

The clear varnish was applied to a flattened clean uncoated aluminum beverage can using a 0.006 wire wound draw bar. The coated can was baked for 180 seconds in a 400ºF. (204ºC.) electric forced draft oven followed by immersion for 30 minutes in boiling deionized water. The coated can was then dried with a towel and crosshatch scribed to make 100 3x3 mm squares. Scotch 610 tape was applied over the scribed area and rubbed down to adhere to the coating. The tape was removed in a quick pull. There was no loss of adhesion in the scribed area of the panel.

The coated can as described above was also immersed for 10 minutes at 180ºF. (82ºC.) in a 1% Joy detergent solution. The coated can was dried and tested for adhesion as described above. There was no loss of adhesion in the scribed area of the panel.

### Examples 2-4

A series of container coating compositions were prepared. The first was the composition of Example 1 containing a sucrose polyol. For comparative purposes, the second composition was prepared with equal parts by weight of a bisphenol A polyol (condensate of bisphenol A and ethylene oxide (1 to 6 molar ratio) available from BASF as MACOL 98B) replacing the sucrose polyol. The third composition was the control and contained no sucrose polyol or bisphenol A polyol.

The compositions were applied to flattened clean uncoated aluminum beverage cans using a 0.006 wire wound draw bar. The coated cans were baked for 40 seconds in a 400ºF. (204ºC.) electric forced draft oven. The coated cans were removed from the oven, cooled and evaluated for adhesion. The results are as follows:

| Example No. | Adhesion (MEK Double Rubs)¹ |
|---|---|
| 2 | 95 |
| 3 (Comparative) | 90 |
| 4 (Control) | 36 |

| | |
|---|---|
| ¹ A cotton pad soaked with methyl ethyl ketone (MEK) was wrapped over the ball of a 2-pound ball peen hammer and moved back and forth over the coating until the coating was severely damaged. | |

## Claims

1. A coating composition comprising:
(a) a polyether polyol having a hydroxyl functionality of 3 to 8 comprising a reaction product of a reaction mixture comprising a saccharide and an alkylene oxide, and
(b) a reaction product of:
(i) a phosphorus acid, and
(ii) a polyepoxide and/or a polyester polyol,
wherein the coating composition is substantially free of bisphenol A and derivatives of bisphenol A.

2. The coating composition of claim 1 in which the polyether polyol has a hydroxyl functionality of 6 to 8 or has a hydroxyl number of 150 to 600.

3. The coating composition of claim 1 in which the saccharide comprises sucrose and/or in which the alkylene oxide comprises ethylene oxide, propylene oxide, and/or butylene oxide.

4. The coating composition of claim 1 in which the phosphorus acid is phosphoric acid.

5. The coating composition of claim 1 in which the polyepoxide is a diglycidyl ether of a diol.

6. The coating composition of claim 1 which is essentially free or completely free of bisphenol A and derivatives of bisphenol A.

7. The coating composition of claim 1 which is substantially free, preferably essentially free or completely free of bisphenol F and derivatives of bisphenol F.

8. The coating composition of claim 6 in which the polyepoxide comprises a diglycidyl ether of an aliphatic and/or cycloaliphatic diol, wherein the diol preferably comprises cyclohexane dimethanol.

9. The coating composition of claim 1 in which the polyester polyol has an Mn of 2000 to 10,000, a hydroxyl number of 20 to 75, and an acid value of 15 to 25.

10. The coating composition of claim 1 in which the phosphorus acid is used in amounts of 0.2 to 0.5 equivalents per equivalent of epoxy in the epoxy resin or per equivalent of hydroxyl in the polyester polyol.

11. The coating composition of claim 1 in which the polyether polyol is present in amounts of 2 to 50 percent by weight based on weight of resin solids in the coating composition and/or in which (b) is present in an amount of up to 10 percent by weight based on weight of resin solids.

12. The coating composition of claim 1 further comprising a polyol comprising an acrylic polymer and/or a polyester polymer, wherein the polyol is preferably present in amounts of 10 to 90 percent by weight based on weight of resin solids.

13. The coating composition of claim 1 further comprising a crosslinking agent, wherein the crosslinking agent preferably comprises an aminoplast and/or a phenolplast or wherein the crosslinking agent is preferably present in amounts of 5 to 50 percent by weight based on weight of resin solids in the coating composition.

14. A coated article comprising:
(a) a substrate, and
(b) deposited on at least a portion of the substrate the coating composition according to any one of claims 1 to 13.

15. The coated article of claim 14 in which the substrate is a container such as a container for food or beverage, which may in particular be a can, wherein the coating is preferably deposited on the exterior walls of the can.

## Patentansprüche

1. Eine Beschichtungszusammensetzung umfassend:
(a) ein Polyetherpolyol aufweisend eine Hydroxylfunktionalität von 3 bis 8 umfassend ein Reaktionsprodukt einer Reaktionsmischung umfassend ein Saccharid und ein Alkylenoxid, und
(b) ein Reaktionsprodukt von:
(i) einer phosphorhaltigen Säure, und
(ii) einem Polyepoxid und/oder einem Polyesterpolyol,
wobei die Beschichtungszusammensetzung im Wesentlichen frei von Bisphenol A und Derivaten von Bisphenol A ist.

2. Die Beschichtungszusammensetzung gemäß Anspruch 1, in welcher das Polyetherpolyol eine Hydroxylfunktionalität von 6 bis 8 aufweist oder eine Hydroxylzahl von 150 bis 600 aufweist.

3. Die Beschichtungszusammensetzung gemäß Anspruch 1, in welcher das Saccharid Saccharose umfasst und/oder in welcher das Alkylenoxid Ethylenoxid, Propylenoxid und/oder Butylenoxid umfasst.

4. Die Beschichtungszusammensetzung gemäß Anspruch 1, in welcher die phosphorhaltige Säure Phosphorsäure ist.

5. Die Beschichtungszusammensetzung gemäß Anspruch 1, in welcher das Polyepoxid ein Diglycidylether eines Diols ist.

6. Beschichtungszusammensetzung gemäß Anspruch 1, welche weitestgehend frei oder gänzlich frei von Bisphenol A und Derivaten von Bisphenol A ist.

7. Die Beschichtungszusammensetzung gemäß Anspruch 1, welche im Wesentlichen frei, vorzugsweise weitestgehend frei oder gänzlich frei von Bisphenol F und Derivaten von Bisphenol F ist.

8. Die Beschichtungszusammensetzung gemäß Anspruch 6, in welcher das Polyepoxid ein Diglycidylether eines aliphatischen und/oder cycloaliphatischen Diols umfasst, wobei das Diol vorzugsweise Cyclohexandimethanol umfasst.

9. Die Beschichtungszusammensetzung gemäß Anspruch 1, in welcher das Polyesterpolyol ein Mn von 2.000 bis 10.000, eine Hydroxylzahl von 20 bis 75 und eine Säurezahl von 15 bis 25 aufweist.

10. Die Beschichtungszusammensetzung gemäß Anspruch 1, in welcher die phosphorhaltige Säure in Mengen von 0,2 bis 0,5 Äquivalenten pro Äquivalent an Epoxid in dem Epoxidharz oder pro Äquivalent an Hydroxyl in dem Polyesterpolyol verwendet wird.

11. Die Beschichtungszusammensetzung gemäß Anspruch 1, in welcher das Polyetherpolyol in Mengen von 2 bis 50 Gewichtsprozent, basierend auf dem Gewicht an Harzfeststoffen, in der Beschichtungszusammensetzung vorhanden ist und/oder in welcher (b) in einer Menge von bis zu 10 Gewichtsprozent, basierend auf dem Gewicht an Harzfeststoffen, vorhanden ist.

12. Die Beschichtungszusammensetzung gemäß Anspruch 1, umfassend des Weiteren ein Polyol umfassend ein Acrylpolymer und/oder ein Polyesterpolymer, wobei das Polyol vorzugsweise in Mengen von 10 bis 90 Gewichtsprozent, basierend auf dem Gewicht an Harzfeststoffen, vorhanden ist.

13. Die Beschichtungszusammensetzung gemäß Anspruch 1 umfassend des Weiteren ein Vernetzungsmittel, wobei das Vernetzungsmittel vorzugsweise einen Aminoplast und/oder einen Phenoplast umfasst oder wobei das Vernetzungsmittel vorzugsweise in Mengen von 5 bis 50 Gewichtsprozent, basierend auf dem Gewicht an Harzfeststoffen in der Beschichtungszusammensetzung, vorhanden ist.

14. Ein beschichteter Gegenstand umfassend:
(a) ein Substrat, und
(b) abgeschieden auf wenigstens einem Teil des Substrats die Beschichtungszusammensetzung gemäß einem der Ansprüche 1 bis 13.

15. Der beschichtete Gegenstand gemäß Anspruch 14, in welchem das Substrat ein Behälter ist, wie etwa ein Behälter für Lebensmittel oder Getränke, welcher insbesondere eine Dose sein kann, wobei die Beschichtung vorzugsweise auf den äußeren Wandungen der Dose aufgebracht ist.

## Revendications

1. Composition de revêtement comprenant :
a) un polyéther-polyol comportant de 3 à 8 groupes fonctionnels hydroxyle par molécule, comprenant un produit de réaction d'un mélange réactionnel comprenant un glucide et un oxyde d'alkylène,
b) et un produit de réaction
i) d'un acide phosphoré
ii) et d'un polyépoxyde et/ou d'un polyester-polyol,
laquelle composition de revêtement ne contient sensiblement pas de bisphénol A ou de dérivés du bisphénol A.

2. Composition de revêtement conforme à la revendication 1, dans laquelle le polyéther-polyol comporte de 6 à 8 groupes fonctionnels hydroxyle par molécule, ou présente un indice d'hydroxyle valant de 150 à 600.

3. Composition de revêtement conforme à la revendication 1, pour laquelle le glucide comprend du saccharose et/ou l'oxyde d'alkylène comprend de l'oxyde d'éthylène, de l'oxyde de propylène et/ou de l'oxyde de butylène.

4. Composition de revêtement conforme à la revendication 1, pour laquelle l'acide phosphoré est un acide phosphorique.

5. Composition de revêtement conforme à la revendication 1, pour laquelle le polyépoxyde est un éther diglycidylique d'un diol.

6. Composition de revêtement conforme à la revendication 1, qui ne contient pratiquement pas ou absolument pas de bisphénol A ou de dérivés du bisphénol A.

7. Composition de revêtement conforme à la revendication 1, qui ne contient sensiblement pas, et de préférence pratiquement pas ou absolument pas, de bisphénol F ou de dérivés du bisphénol F.

8. Composition de revêtement conforme à la revendication 6, pour laquelle le polyépoxyde comprend un éther diglycidylique d'un diol aliphatique et/ou cycloaliphatique, lequel diol comprend de préférence du cyclohexane-diméthanol.

9. Composition de revêtement conforme à la revendication 1, pour laquelle le polyester-polyol présente une masse molaire moyenne en nombre Mn valant de 2 000 à 10 000, un indice d'hydroxyle valant de 20 à 75, et un indice d'acide valant de 15 à 25.

10. Composition de revêtement conforme à la revendication 1, pour laquelle l'acide phosphoré a été utilisé en une quantité de 0,2 à 0,5 équivalent, par équivalent époxyde de la résine époxy ou par équivalent hydroxyle du polyester-polyol.

11. Composition de revêtement conforme à la revendication 1, dans laquelle le polyéther-polyol se trouve présent en une proportion valant de 2 à 50 %, en poids rapporté au poids des matières solides de résine présentes dans la composition de revêtement, et/ou dans laquelle le composant (b) se trouve présent en une proportion valant jusqu'à 10 %, en poids rapporté au poids des matières solides de résine.

12. Composition de revêtement conforme à la revendication 1, qui comprend en outre un polyol comprenant un polymère polyacrylique et/ou un polymère polyester, lequel polyol se trouve de préférence présent en une proportion valant de 10 à 90 %, en poids rapporté au poids des matières solides de résine.

13. Composition de revêtement conforme à la revendication 1, qui comprend en outre un agent de réticulation, lequel agent de réticulation comprend de préférence une résine aminoplaste et/ou une résine phénoplaste, ou lequel agent de réticulation se trouve de préférence présent en une proportion valant de 5 à 50 %, en poids rapporté au poids des matières solides de résine présentes dans la composition de revêtement.

14. Article revêtu, comprenant :
a) un substrat,
b) et une composition de revêtement conforme à l'une des revendications 1 à 13, déposée sur au moins une partie du substrat.

15. Article revêtu conforme à la revendication 14, dans lequel le substrat est un récipient comme un récipient pour nourriture ou boisson, qui peut être en particulier une boîte, et dans lequel le revêtement est de préférence déposé sur les parois extérieures de la boîte.
